# EUROPÄISCHE PATENTSCHRIFT

(11) **EP 3 706 045 B1**
(45) Veröffentlichungstag und Bekanntmachung des Hinweises auf die Patenterteilung: **04.12.2024**
(21) Anmeldenummer: 20159255.7
(22) Anmeldetag: 25.02.2020
(51) Int. Cl.: G06K 19/077

(54) **TRAGBARER DATENTRÄGER UND VERFAHREN ZUM HERSTELLEN EINES TRAGBAREN DATENTRÄGERS**
PORTABLE DATA CARRIER AND METHOD FOR MANUFACTURING A PORTABLE DATA CARRIER
SUPPORT DE DONNÉES PORTABLE ET PROCÉDÉ DE FABRICATION D'UN SUPPORT DE DONNÉES PORTABLE

(30) Priorität: 04.03.2019 DE 102019105378
(43) Veröffentlichungstag der Anmeldung: 09.09.2020
(73) Patentinhaber: Bundesdruckerei GmbH, 10969 Berlin (DE)
(72) Erfinder: BAUDACH, Steffen, 13189 Berlin (DE)
(74) Vertreter: Bittner, Thomas L.

(56) Entgegenhaltungen:
- WO-A1-02/095674
- DE-A1- 102004 031 879
- DE-A1- 102006 036 286
- DE-A1- 102014 007 474
- DE-A1- 102015 102 731
- FR-A1- 2 840 430
- US-A- 5 889 273
- US-A1- 2005 236 603
- US-A1- 2007 103 311
- US-A1- 2007 296 592
- US-A1- 2015 186 768
- US-A1- 2017 344 766
- US-A1- 2018 194 158

## Beschreibung

Die Erfindung betrifft einen tragbaren Datenträger und ein Verfahren zum Herstellen eines tragbaren Datenträgers.

### Hintergrund

In Verbindung mit RFID-Transpondern (RFID, Radio Frequency Identification) können generell zwei Arten unterschieden werden: aktive Transponder und passive Transponder. Aktive Transponder besitzen eine eigene Energieversorgung, beispielsweise mittels einer Batterie. Passive Transponder beziehen die zum Betrieb notwendige Energie aus einem von einem externen Gerät, insbesondere einem Lesegerät, erzeugten Feld. Energie und Daten werden kontaktlos übertragen. Je nach RFID-Technologie kann dies ein Magnetfeld (RFID-Systeme bis 13,56 MHz) oder ein elektromagnetisches Feld (RFID-Systeme ab 433 MHz) sein. Passive RFID-Transponder sind insoweit ohne das äußere Feld, welches von dem externen Gerät bereitgestellt wird, also funktionsunfähig. Eine große Auswahl an Transponderchip-Typen sind für folgende RFID-Technologien verfügbar: niederfrequente Energie- / Datenübertragung - LF, 125 - 135 kHz; hochfrequente Energie- / Datenübertragung - HF, 13.56 MHz und ultrahochfrequente (UHF) Energie- / Datenübertragung - UHF, 850 - 950 MHz.

Die RFID-Transponder verfügen über eine Antenneneinrichtung mir einer Antennenschleife, welche ein oder mehrere Windungen aufweisen kann und über die sowohl die Energieversorgung des Transponders als auch der Datenaustausch zwischen dem Transponder und dem externen Gerät unter Verwendung des magnetischen oder das elektromagnetischen Felds stattfindet. Hierzu koppelt die Antennenschleife an ein externes Feld, sei es ein Magnetfeld oder ein elektromagnetisches Feld, welches von einem externen Gerät zum Übertragen von Daten und / oder Energie bereitgestellt wird, beispielweise einem Lese-SchreibGerät.

Zur einfachen und schnellen kontaktlosen Kommunikation zwischen zwei Geräten wurde eine induktive Übertragungstechnik entwickelt, welche als sogenannte Nahfeldkommunikation (NFC, Near Field Communication) bekannt ist. Die Kopplung der beiden Geräte, von denen eines zum Beispiel ein RFID-Transponder ist, findet über Spulen statt, wobei die Trägerfrequenz wie in RFID-Systemen 13,56 MHz beträgt.

Der Artikel der Online-Enzyklopädie Wikipedia: "RFID" vom 01.03.2019 befasst sich im Wesentlichen mit der RFID-Technologie selbst und mit RFID-Anwendungen. Es werden die Entwicklungsgeschichte, die Technik, der Einsatz, die Verbreitung und die Kosten, die Studienmöglichkeiten sowie die Bedenken und die Kritik beschrieben.

Im Dokument US 2015 / 0 186 768 A1 wird ein Transponder beschrieben, auf dem ein transparentes, leitendes Material aufgebracht wird. Im Speziellen bildet das transparente, leitende Material eine Antenne bzw. Antennenabschnitt. Die Zusammensetzung des transparenten, leitenden Materials wird beschrieben. Verschiedene Aufbringungsformen der transparenten, leitenden Antenne auf dem Transponder werden gezeigt.

Ein RFID-Transponder, der einen RFID-Chip, eine mit dem RFID-Chip elektrisch verbundene Schleife und eine mit der Schleife gekoppelte im Wesentlichen transparente Antenne beinhaltet, wird im Dokument US 2016 / 0 203 395 A1 offenbart. Der RFID-Transponder kann über einer Lichtquelle angebracht werden, ohne deren Helligkeit zu beeinflussen. Alternativ kann dieser RFID-Transponder auf einer Oberfläche fixiert werden, ohne Markierungen, Designs, Motive und/oder Text der Oberfläche zu verdecken.

Dokument DE 10 2008 058 398 A1 beschreibt einen Datenträger mit einem Körper, sowie mit einer Schaltkreisanordnung und einer gedruckten Antenne. Die Antenne ist in oder an dem Körper angeordnet. Dabei ist die Antenne zumindest teilweise aus einer Druckfarbe gedruckt, die zumindest eine Sorte von elektrisch leitfähigen Fullerenen enthält.

Ein weiteres Konzept, offenbart im Dokument DE 10 2006 031 968 betrifft einen RFID-Transponder, ein optisches Element mit einem RFID-Transponder sowie eine Antenne für einen RFID-Transponder. Die Antenne des Gegenstands ist optisch transparent ausgebildet. Des Weiteren wird ein Verfahren zur Herstellung einer Antenne für einen RFID-Transponder offenbart.

Das Dokument US 2018 / 0 102 588 A1 offenbart eine elektronische Vorrichtung mit einer Anzeigeeinheit, die zum elektronischen Anzeigen von Informationen betreibbar ist, eine Antenne, die aus mindestens einem transparenten Leiter gebildet ist, der sich über eine Oberseite der Anzeigeeinheit erstreckt und eine drahtlose Kommunikationsschaltung, die operativ mit der Antenne gekoppelt und unter der Anzeigeeinheit positioniert ist.

Dokument US 2004 / 0 118 930 A1 beschreibt ein Verfahren zur Herstellung einer transparenten oder durchscheinenden Transaktionskarte mit mehreren Merkmalen, wie einer holographischen Folie, einem integrierten Schaltkreischip, einer RFID-Schaltung, einem Silbermagnetstreifen mit Text auf dem Magnetstreifen, einem Opazitätsgradienten, einer unsichtbaren, optisch erkennbaren Verbindung und einem durchscheinenden Unterschriftsfeld, sodass die RFID-Schaltung und die Unterschrift auf der Rückseite der Karte von der Vorderseite der Karte sichtbar sind.

Ein Sicherheitselement zur RF-Identifikation sowie ein Sicherheitsdokument, das mit einem derartigen Sicherheitselement versehen ist, ist in dem Dokument DE 10 2004 031 879 A1 offenbart. Das Sicherheitselement weist einen flexiblen Folienkörper auf, in dem eine elektronische Schaltung, die zur Speicherung von sicherheitsrelevanten Informationen eingerichtet ist, und eine RF-Antenne integriert sind, die mit der elektronischen Schaltung verbunden ist und zur berührungslosen Kommunikation der elektronischen Schaltung mit einer Prüfeinrichtung dient. Auf eine Oberfläche des flexiblen Folienkörpers ist ein erstes optisch variables Element dauerhaft befestigt, das den Bereich des flexiblen Folienkörpers, in dem die elektronische Schaltung angeordnet ist, zumindest bereichsweise überdeckt.

Das Dokument US 2017 / 0 344 766 A1 betrifft eine Kommunikationsvorrichtung mit einer geräteseitigen Antenne zur drahtlosen Kommunikation mit einer IC-Karte, die eine kartenseitige Antenne enthält, die in einer rechteckigen Form gewickelt ist, wobei die geräteseitige Antenne in einer oder mehreren Schleifen ausgebildet ist. Während der drahtlosen Kommunikation mit der IC-Karte, die einen inneren Umfang mit einer langen Abmessung von 69 mm und einer kurzen Abmessung von 38 mm hat, in einem Abstand von 25 mm, wird ein innerer Umfang der geräteseitigen Antenne an einer Position festgelegt, an der die Intensität H eines Magnetfeldes, das von der kartenseitigen Antenne in einer Richtung senkrecht zu einer Fläche, auf der die geräteseitige Antenne angeordnet ist, erzeugt wird, in einem Bereich liegt, der durch die Ungleichung 0,037 I/4π< H<0,063 I/4π angegeben ist, wobei I ein Strom der kartenseitigen Antenne ist.

In dem Dokument US 2018 / 0 194 158 A1 ist ein Sicherheitsdokument offenbart, das mindestens eine Antenne und einen mit der Antenne verbundenen Chip umfasst. Das Sicherheitsdokument ist dadurch gekennzeichnet, dass es ferner mindestens ein transparentes Fenster umfasst, das so angeordnet ist, dass mindestens ein Teil der Antenne in dem Fenster sichtbar ist und dadurch ein sichtbares Sicherheitsmerkmal bildet.

### Zusammenfassung

Aufgabe der Erfindung ist es, einen tragbaren Datenträger und ein Verfahren zum Herstellen eines tragbaren Datenträgers anzugeben, die es ermöglichen tragbare Datenträger in unterschiedlicher Ausbildung flexibel herzustellen, insbesondere hinsichtlich optisch transparenter Bereiche.

Zur Lösung sind ein tragbarer Datenträger sowie ein Verfahren zum Herstellen eines tragbaren Datenträgers nach den unabhängigen Ansprüchen geschaffen. Ausgestaltungen sind Gegenstand von abhängigen Unteransprüchen.

Der tragbare Datenträger ist eingerichtet über die Antenneneinrichtung kontaktlos Energie und / oder Daten von einem externen Gerät zu empfangen, beispielsweise von einem Lese-Schreibgerät. Hierbei wird zum Übertragen von Energie und / oder Daten eine kontaktlose Kopplung zwischen der Antenneneinrichtung des Datenträgers, insbesondere der Antennenschleife, und einer Antenneneinrichtung des Lese-Schreib-Geräts ausgebildet wird. Beispielsweise kann mit der Antenneneinrichtung und dem Mikrocontroller ein RFID-Transponder auf dem Datenträger ausgebildet sein.

Da der Schleifenabschnitt der Antennenschleife im Wellenlängenbereich des sichtbaren Lichts transparent ist, behindert dieser Schleifenabschnitt nicht die Ausbildung von optisch transparenten Bereichen oder Abschnitten an dem Datenträgerkörper, beispielsweise in Form eines optischen Fensters. Vielmehr können solche Bereiche ohne Rücksichtnahme auf den Schleifenabschnitt variabel an dem Datenträgerkörper vorgesehen werden. Die im Stand der Technik bekannten Leiterbahnen für die Antennenschleife müssen demgegenüber in nicht transparenten Abschnitten des Datenträgerkörpers verlaufen. Daher ist dort der Bereich, in welchem optisch transparente Abschnitte des Datenträgerkörpers ausgebildet werden können, wesentlich beschränkt.

Der Datenträgerkörper weist einen optisch transparenten Bereich auf, durch den der Schleifenabschnitt hindurch verläuft. Der optisch transparente Bereich des Datenträgerkörpers kann insbesondere im Wellenlängenbereich des sichtbaren Lichts transparent sein. An dem Datenträgerkörper sind gemäß der vorliegenden Erfindung mehrere voneinander getrennte optisch transparente Bereiche als optisch transparente Fenster vorgesehen. Der Schleifenabschnitt erstreckt sich durch alle dieser optisch transparenten Bereiche.

Der optisch transparente Bereich des Datenträgerkörpers und der Schleifenabschnitt können gemeinsam in einem örtlich begrenzten Gebiet angeordnet sein. In Draufsicht auf dem Datenträger können der optisch transparente Bereich und der Schleifenabschnitt Überschneidungen aufweisen. Da sowohl in einer möglichen Ausführung der optisch transparente Bereich als auch der Schleifenabschnitt im Wellenlängenbereich des sichtbaren Lichts transparent ausgebildet sind, kann das örtlich begrenzte Gebiet insbesondere in Draufsicht transparent ausgebildet und im Wellenlängenbereich des sichtbaren Lichts bevorzugt vollständig transparent ausgebildet sein.

Der optisch transparente Bereich kann in einem umlaufenden Randbereich des Datenträgerkörpers ausgebildet sein. Der umlaufende Randbereich des Datenträgers kann unterbrochen oder durchgehend optisch transparent sein. Dieses ermöglicht es, den Schleifenabschnitt und wahlweise weitere transparente Abschnitte der Antennenschleife, wenn diese im Wellenlängenbereich des sichtbaren Lichts transparenten Material sind, im umlaufenden Randbereich anzuordnen, sodass der von der Antennenschleife eingefasste Bereich möglichst groß ist.

Die Antennenschleife kann vollständig aus dem elektrisch leitenden Material hergestellt und im Wellenlängenbereich des sichtbaren Lichts transparent sein.

Der Schleifenabschnitt kann eine gedruckte Leiterbahn sein. Bei dieser Ausführungsform ist zumindest der Schleifenabschnitt mittels aufdrucken des elektrisch leitenden Materials hergestellt. Eine transparente Ausführung der Antenennschleife kann auch unter Verwendung unterschiedlicher elektrisch leitender Materialien erfolgen, die jeweils die Ausbildung von transparenten Schleifenabschnitten ermöglichen.

Das elektrisch leitende Material kann ein elektrisch leitendes Polymermaterial sein, zum Beispiel PEDOT (Poly(3,4-ethylenedioxythiophen)) / Tysolat, beispielweise herstellbar mittels oxidativer Polymerisation von Ethylendioxythiophen in Gegenwart von Eisen(III)-Tosylat.

Bei dem Verfahren zum Herstellen kann vorgesehen sein, dass der Schleifenabschnitt als eine gedruckte Leiterbahn hergestellt wird. Die gesamte Antennenschleife kann mittels gedruckter Leiterbahnen ausgeführt sein.

Die in Verbindung mit dem tragbaren Datenträger erläuterten Ausgestaltungen können bei dem Verfahren zum Herstellen entsprechend vorgesehen sein.

Bei dem tragbaren Datenträger handelt es sich um einen Datenträger aus der folgenden Gruppe: kontaktlose Chipkarte, Wert- oder Sicherheitsdokument wie Identitätsdokument oder Ausweisdokument. Chipkarten mit einem Prozessor werden auch als Prozessorkarten bezeichnet. Eine kontaktlose Chipkarte, welche eingerichtet sein kann für eine ISO 14443 konforme Kommunikation, kann ergänzend über Kontakte verfügen, die insbesondere ein Ein- und Auslesen von Daten mittels kontaktbehafteter Übertragung ermöglichen, zum Beispiel konform mit ISO 7816.

Ein Wert- oder Sicherheitsdokument kann beispielsweise Folgendes sein: ein Reisepass, Personalausweis, Führerschein, ein Zugangskontrollausweis oder eine anderes Identitätsdokument, eine Passdatenseite, ein Fahrzeugschein, Fahrzeugbrief, Visum, Scheck, Zahlungsmittel, insbesondere eine Banknote, eine Scheck-, Bank-, Kredit- oder Barzahlungskarte, Kundenkarte, Gesundheitskarte, Chipkarte, ein Firmenausweis, Berechtigungsnachweis, Mitgliedsausweis, Geschenk- oder Einkaufsgutschein, Frachtbrief oder ein sonstiger Berechtigungsnachweis, Steuerzeichen, Postwertzeichen, Ticket, Jeton oder ein anderes Dokument. Das Wert- oder Sicherheitsprodukt kann beispielsweise eine Smartcard sein. Das Wert- oder Sicherheitsdokument kann im ID 1-, ID 2-, ID 3- oder in irgendeinem anderen normierten oder nicht normierten Format, beispielsweise in Heftform, wie bei einem passähnlichen Gegenstand, vorliegen. Vorzugsweise liegt das Wert- oder Sicherheitsdokument in Kartenform vor.

Ein Wert- oder Sicherheitsprodukt kann im Allgemeinen ein Laminat aus mehreren Dokumentenlagen, die passgenau unter Wärmeeinwirkung und unter erhöhtem Druck flächig miteinander verbunden sind. Diese Produkte sollen den normierten Anforderungen genügen, beispielsweise gemäß ISO 10373, ISO / IEC 7810, ISO 14443.

Die Dokumentenlagen bestehen beispielsweise aus einem Trägermaterial, das sich für eine Lamination eignet. Dieses Trägermaterial kann durch ein oder mehrere Polymere gebildet sein, die ausgewählt sind aus der folgenden Gruppe: Polycarbonat (PC), insbesondere Bisphenol A-Polycarbonat, Polyethylenterephthalat (PET), deren Derivate, wie Glykolmodifiziertes PET (PETG), Polyethylennaphthalat (PEN), Polyvinylchlorid (PVC), Polyvinylbutyral (PVB), Polymethylmethacrylat (PMMA), Polyimid (Pl),Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-StyrolCopolymer (ABS) sowie deren Derivate, oder Papier oder Pappe oder Glas oder Metall oder Keramik. Bevorzugt besteht das Wert- oder Sicherheitsdokument aus Polycarbonat und zwar besonders bevorzugt aus Polycarbonat auf Basis von Bisphenol A oder aus PC/TPU/PC. Die Polymere können entweder gefüllt oder ungefüllt vorliegen. Im letzteren Falle sind sie vorzugsweise transparent oder transluzent. Falls die Polymere gefüllt sind, sind sie opak. Bevorzugt wird das Produkt aus 3 bis 12 Folien, vorzugsweise 4 bis 10 Folien, hergestellt.

Im Folgenden werden weitere Details unter Bezugnahme auf Figuren einer Zeichnung näher erläutert. Hierbei zeigen:
- Fig. 1: eine schematische Darstellung eines tragbaren Datenträgers, welcher als kontaktlose Chipkarte ausgeführt ist; und
- Fig. 2: eine schematische Darstellung eines weiteren tragbaren Datenträgers, welcher als kontaktlose Chipkarte ausgeführt ist.

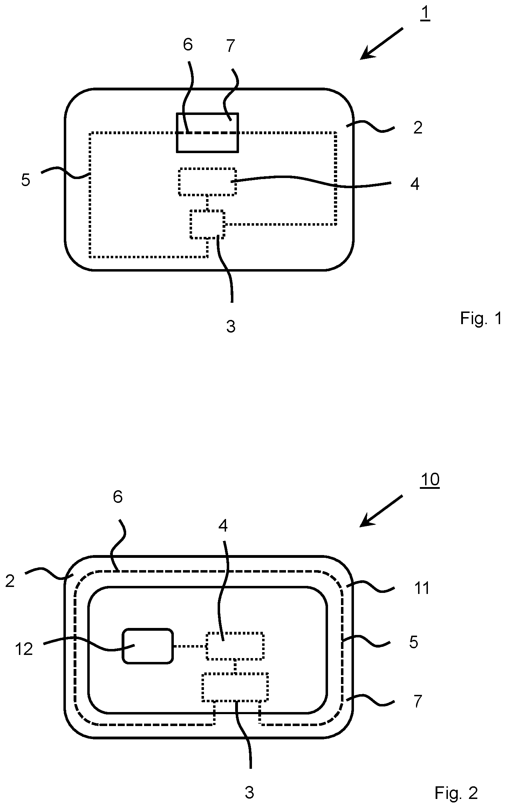

Die Beispiele in Fig. 1 und 2 gehören nicht zur vorliegenden Erfindung und fallen, insofern beispielhaft lediglich ein Fenster gezeigt ist, nicht unter den Wortlaut der Ansprüche, erleichtern aber das Verständnis der Erfindung, gemäß welcher mehrere der in den Fig. 1 und 2 beispielhaft gezeigten Fenster vorgesehen sind.

Fig. 1 zeigt eine schematische Darstellung eines tragbaren Datenträgers 1, welcher in dem Beispiel als eine kontaktlose Chipkarte ausgeführt ist. An einem Datenträgerkörper 2 sind eine Antenneneinrichtung 3 sowie ein hiermit verbundener Mikrocontroller 4 vorgesehen, welches in den Datenträgerkörper 2 integriert sind. Im Fall der Chipkarte kann der Datenträgerkörper 1 als eine Schichtanordnung aus Kunststofffolien hergestellt sein, wie dieses in verschiedenen Ausführungsformen als solches bekannt ist. Die Antenneneinrichtung 3 sowie der Mikrocontroller 4 sind dann zwischen Lagen von Kunststofffolien angeordnet.

Die Antenneneinrichtung 3 weist eine Antennenschleife 5 mit einem Schleifenabschnitt 6 auf, der bei dem gezeigten Beispiel durch ein optisch transparentes Fenster 7 verläuft, in dessen Bereich der Datenträgerkörper 1 im Wellenlängenbereich des sichtbaren Lichts transparent ist. Beispielweise werden dort Kunststofffolien genutzt, die transparent sind. Die Ausbildung des Schleifenabschnitts 6 aus einem elektrisch leitenden Material, derart, dass der Schleifenabschnitts 6 im Wellenlängenbereich des sichtbaren Lichts (ebenfalls) transparent ist, ist in der Fig. 1 mittels Verwendung der gestrichelten Linie gezeigt.

Der Schleifenabschnitt 6 oder die gesamte Antennenschleife 5 können beim Herstellen des tragbaren Datenträgers 1 mittels eines Druckverfahrens hergestellt werden, bei dem das elektrisch leitende Material auf ein darunterliegendes Substrat aufgedruckt wird, also im Fall der Chipkarte eine oder mehrere bereits aufeinander laminierte Kunststofffolienschichten. Zum Einbetten der Antennenschleife 5 in den Datenträgerkörper 1 ist dann vorgesehen, mindestens eine weitere Kunststofffolienschicht auf die Antennenschleife 5 auf zu laminieren, wie dieses für die Herstellung von Chipkarten aus Kunststofffolienschichten an sich bekannt ist.

Fig. 2 zeigt eine schematische Darstellung eines weiteren tragbaren Datenträgers 10, welcher als kontaktlose Chipkarte ausgeführt ist. Für die gleichen Merkmale werden dieselben Bezugszeichen wie in Fig. 1 verwendet. Das optisch transparente Fenster 7 ist durchgehend entlang eines umlaufenden Randes 11 gebildet. Bei dem Beispiel in Fig. 2 weist der weitere tragbare Datenträger 10 Anschlusskontakte 12 auf, über die ergänzend ein kontaktbehafteter Datenaustausch ermöglicht ist, wie dies als solches für Chipkarten bekannt ist.

### Bezugszeichenliste

- 1; 10: tragbarer Datenträger
- 2: Datenträgerkörper
- 3: Antenneneinrichtung
- 4: Mikrocontroller
- 5: Antennenschleife
- 6: Schleifenabschnitt
- 7: optisch transparenter Bereich
- 11: umlaufender Randbereich
- 12: Anschlusskontakte

## Patentansprüche

1. Tragbarer Datenträger (1; 10), der eingerichtet ist, kontaktlos Energie und / oder Daten zu empfangen, mit:
- einem Datenträgerkörper (2);
- einer Antenneneinrichtung (3), die an dem Datenträgerkörper (2) angeordnet ist und eine Antennenschleife (5) aufweist, wobei die Antenneneinrichtung (3) eingerichtet ist, mittels der Antennenschleife (5) zum Übertragen von Energie und / oder Daten kontaktlos an ein externes Feld zu koppeln; und
- einem Mikrocontroller (4), der an dem Datenträgerkörper (2) angeordnet ist und einen Prozessor und eine Speichereinrichtung aufweist, die eingerichtet ist, über die Antenneneinrichtung (3) empfangene Daten zu speichern, und der zum Empfangen einer Betriebsspannung mit der Antenneneinrichtung (3) verbunden ist;
wobei
- die Antennenschleife (5) einen Schleifenabschnitt (6) aus einem elektrisch leitenden Material aufweist, welches im Wellenlängenbereich des sichtbaren Lichts transparent ist; und
- es sich bei dem tragbaren Datenträger (1; 10) um einen Datenträger aus der folgenden Gruppe handelt: kontaktlose Chipkarte, Wert- oder Sicherheitsdokument oder Ausweisdokument,
**dadurch gekennzeichnet, dass** der Datenträgerkörper (2) mehrere voneinander getrennte optisch transparente Fenster aufweist und der Schleifenabschnitt (6) durch die transparenten Fenster hindurch verläuft.

2. Tragbarer Datenträger (1; 10) nach Anspruch 1, **dadurch gekennzeichnet, dass** ein optisch transparenter Bereich (7) in einem umlaufenden rahmenartigen Randbereich (11) des Datenträgerkörpers (2) ausgebildet ist.

3. Tragbarer Datenträger (1; 10) nach mindestens einem der vorangehenden Ansprüche, **dadurch gekennzeichnet, dass** die Antennenschleife (5) vollständig aus dem elektrisch leitenden Material hergestellt ist, welches im Wellenlängenbereich des sichtbaren Lichts transparent ist.

4. Tragbarer Datenträger (1; 10) nach mindestens einem der vorangehenden Ansprüche, **dadurch gekennzeichnet, dass** der Schleifenabschnitt (6) ein gedruckter Schleifenabschnitt (6) ist.

5. Tragbarer Datenträger (1; 10) nach mindestens einem der vorangehenden Ansprüche, **dadurch gekennzeichnet, dass** das elektrisch leitende Material ein elektrisch leitendes Polymermaterial ist.

6. Verfahren zum Herstellen eines tragbaren Datenträgers (1; 10), der eingerichtet ist, kontaktlos Energie und / oder Daten zu empfangen, mit:
- Herstellen einer Antenneneinrichtung (3) mit einer Antennenschleife (5) an einem Datenträgerkörper (2), wobei die Antenneneinrichtung (3) eingerichtet ist, zum Übertragen von Energie und / oder Daten kontaktlos an eine externe Einrichtung zu koppeln; und
- Anordnen eines Mikrocontrollers (4) an einem Datenträgerkörper (2), wobei der Mikrocontroller (4) zum Empfangen einer Betriebsspannung mit der Antenneneinrichtung (3) verbunden wird und einen Prozessor sowie eine Speichereinrichtung aufweist, die eingerichtet ist, über die Antenneneinrichtung (3) empfangene Daten zu speichern;
wobei
- die Antennenschleife (5) mit einem Schleifenabschnitt (6) aus einem elektrisch leitenden Material hergestellt wird, welches im Wellenlängenbereich des sichtbaren Lichts transparent ist; und
- es sich bei dem tragbaren Datenträger (1; 10) um einen Datenträger aus der folgenden Gruppe handelt: kontaktlose Chipkarte, Wert- oder Sicherheitsdokument oder Ausweisdokument,
**dadurch gekennzeichnet, dass** der Datenträgerkörper (2) mit mehreren voneinander getrennten optisch transparenten Fenstern hergestellt wird und der Schleifenabschnitt (6) durch die transparenten Fenster hindurch verläuft.

7. Verfahren nach Anspruch 6, **dadurch gekennzeichnet, dass** der Schleifenabschnitt (6) gedruckt wird.

## Claims

1. A portable data carrier (1; 10) that is configured to receive energy and/or data in a contactless manner, comprising:
- a data carrier body (2);
- an antenna device (3) which is arranged on the data carrier body (2) and has an antenna loop (5), wherein the antenna device (3) is configured to couple in a contactless manner to an external field by means of the antenna loop (5) for the transmission of energy and/or data; and
- a microcontroller (4) which is arranged on the data carrier body (2) and has a processor and a storage device that is configured to store data received via the antenna device (3) and is connected to the antenna device (3) to receive an operating voltage;
wherein
- the antenna loop (5) has a loop section (6) made of an electrically conductive material which is transparent in the wavelength range of visible light; and
- the portable data carrier (1; 10) is a data carrier selected from the following group: contactless chip card, value or security document or identification document,
**characterized in that** the data carrier body (2) has multiple optically transparent windows that are separated from one another and the loop section (6) runs through the transparent windows.

2. The portable data carrier (1; 10) according to claim 1, **characterized in that** an optically transparent area (7) is formed in a surrounding frame-like edge region (11) of the data carrier body (2).

3. The portable data carrier (1; 10) according to at least any one of the preceding claims, **characterized in that** the antenna loop (5) is made entirely of the electrically conductive material that is transparent in the wavelength range of visible light.

4. The portable data carrier (1; 10) according to at least any one of the preceding claims, **characterized in that** the loop section (6) is a printed loop section (6).

5. The portable data carrier (1; 10) according to at least any one of the preceding claims, **characterized in that** the electrically conductive material is an electrically conductive polymer material.

6. A method for manufacturing a portable data carrier (1; 10) that is configured to receive energy and/or data in a contactless manner, comprising:
- manufacturing an antenna device (3) with an antenna loop (5) on a data carrier body (2), wherein the antenna device (3) is configured to couple in a contactless manner to an external device for the transmission of energy and/or data; and
- arranging a microcontroller (4) on a data carrier body (2), wherein the microcontroller (4) is connected to the antenna device (3) for receiving an operating voltage and includes a processor and a storage device which is configured to store data received via the antenna device (3);
wherein
- the antenna loop (5) is manufactured with a loop section (6) made of an electrically conductive material which is transparent in the wavelength range of visible light; and
- the portable data carrier (1; 10) is a data carrier selected from the following group: contactless chip card, value or security document or identification document,
**characterized in that** the data carrier body (2) is manufactured with multiple optically transparent windows that are separated from one another and the loop section (6) runs through the transparent windows.

7. The method according to claim 6, **characterized in that** the loop section (6) is printed.

## Revendications

1. Support de données portable (1 ; 10), configuré pour recevoir de l'énergie et/ou des données sans contact, comportant:
- un corps de support de données (2);
- un dispositif d'antenne (3), qui est disposé sur le corps de support de données (2) et comporte une boucle d'antenne (5), dans lequel le dispositif d'antenne (3) est configuré pour transmettre de l'énergie et/ou de coupler des données sans contact à un champ externe au moyen de la boucle d'antenne (5) ; et
- un microcontrôleur (4), qui est disposé sur le corps de support de données (2) et présente un processeur et un dispositif de mémoire, qui est configuré pour mémoriser les données reçues via le dispositif d'antenne (3) et qui est relié au dispositif d'antenne (3) pour recevoir une tension de fonctionnement;
dans lequel
- la boucle d'antenne (5) présente une section de boucle (6) constituée d'un matériau électriquement conducteur, qui est transparent dans la plage de longueurs d'onde de la lumière visible ; et
- le support de données portable (1 ; 10) consiste en un support de données du groupe suivant : carte à puce sans contact, document de valeur ou de sécurité ou document d'identification,
**caractérisé en ce que** le corps de support de données (2) présente plusieurs fenêtres optiquement transparentes séparées les unes des autres et la section de boucle (6) passe à travers les fenêtres transparentes.

2. Support de données portable (1 ; 10) selon la revendication 1, **caractérisé en ce que** une zone optiquement transparente (7) est formée dans une zone périphérique (11) en forme de cadre du corps de support de données (2).

3. Support de données portable (1 ; 10) selon au moins une des revendications précédentes, **caractérisé en ce que** la boucle d'antenne (5) est complètement fabriquée en un matériau électriquement conducteur, qui est transparent dans la plage de longueur d'onde de la lumière visible.

4. Support de données portable (1 ; 10) selon au moins une des revendications précédentes, **caractérisé en ce que** la section de boucle (6) est une section de boucle imprimée (6).

5. Support de données portable (1 ; 10) selon au moins une des revendications précédentes, **caractérisé en ce que** le matériau électriquement conducteur est un matériau polymère électriquement conducteur.

6. Procédé de fabrication d'un support de données portable (1 ; 10), configuré pour recevoir de l'énergie et/ou des données sans contact, comportant les étapes consistant à :
- fabriquer un dispositif d'antenne (3) avec une boucle d'antenne (5) sur un corps de support de données (2), dans lequel le dispositif d'antenne (3) est configuré pour être couplé sans contact à un dispositif externe pour transmettre de l'énergie et/ou des données ; et
- disposer un microcontrôleur (4) sur un corps de support de données (2), dans lequel le microcontrôleur (4) est connecté au dispositif d'antenne (3) pour recevoir une tension de fonctionnement et présente un processeur ainsi qu'un dispositif de mémoire, qui est configuré pour mémoriser les données reçues via le dispositif d'antenne (3) ;
dans lequel
- la boucle d'antenne (5) dotée d'une section de boucle (6) est fabriquée dans un matériau électriquement conducteur, qui se transparent dans la plage de longueurs d'onde de la lumière visible ; et
- le support de données portable (1 ; 10) est un support de données du groupe suivant : carte à puce sans contact, document de valeur ou de sécurité ou document d'identité,
**caractérisé en ce que** le corps de support de données (2) est fabriqué avec plusieurs fenêtres optiquement transparentes séparées les unes des autres et que la section de boucle (6) passe à travers les fenêtres transparentes.

7. Procédé selon la revendication 6, **caractérisé en ce que** la section de boucle (6) est imprimée.
